(19) Europäisches Patentamt

European Patent Office

Office européen des brevets

(11) Veröffentlichungsnummer : **0 359 970 B1**

(12) **EUROPÄISCHE PATENTSCHRIFT**

(45) Veröffentlichungstag der Patentschrift :
**18.03.92 Patentblatt 92/12**

(51) Int. Cl.⁵ : **E06C 1/32**

(21) Anmeldenummer : **89114647.4**

(22) Anmeldetag : **08.08.89**

(54) **Rastgelenk für eine Mehrzweckleiter.**

(30) Priorität : **06.09.88 DE 3830251**

(43) Veröffentlichungstag der Anmeldung :
**28.03.90 Patentblatt 90/13**

(45) Bekanntmachung des Hinweises auf die
Patenterteilung :
**18.03.92 Patentblatt 92/12**

(84) Benannte Vertragsstaaten :
**AT BE CH DE ES FR GB GR IT LI LU NL SE**

(56) Entgegenhaltungen :
**DE-A- 2 634 752**
**FR-A- 2 082 571**
**FR-A- 2 244 097**
**FR-A- 2 392 268**

(73) Patentinhaber : **Hailo-Werk Rudolf Loh GmbH
& Co. KG
Industriestrasse
W-6342 Haiger (DE)**

(72) Erfinder : **Pfeifer, Rudolf
Sängerstrasse 55
W-5245 Mudersbach (DE)**

(74) Vertreter : **Vogel, Georg
Pat.-Ing. Georg Vogel Hermann-Essig-Strasse
35
W-7141 Schwieberdingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 359 970 B1

## Beschreibung

Die Erfindung betrifft ein Rastgelenk nach dem Oberbegriff des Anspruches 1.

Eine Mehrzweckleiter besteht regelmäßig aus zwei oder mehreren Leiterteilen mit etwa gleicher Länge. Diese Leiterteile können durch Verrastung in ihren Gelenkstellen in verschiedene Arbeitsstellungen eingestellt werden.

Herkömmliche Rastgelenke, wie sie z.B. in der FR-A 2 392 268 beschrieben sind, besitzen Bolzen und Ausnehmungen, die miteinander betrieblich verbindbar sind. Dabei müssen die Bolzen aus den Ausnehmungen herausgezogen, die Holme der Leiter in die gewünschte Lage verschwenkt und sodann die Bolzen in die Ausnehmungen gesteckt werden. Dies ist umständlich und bedarf auch gewisser Übung, um die gewünschte Lage der Holme einstellen zu können.

Ausgehend von dem obigen Stand der Technik liegt der Erfindung die Aufgabe zugrunde, ein Rastgelenk zu schaffen, das mit den Holmen einfach verbindbar, leicht handhabbar und auch im zusammengeklappten Zustand der Leiter verriegelbar ist.

Die gestellte Aufgabe wird erfindungsgemäß durch die kennzeichnenden Merkmale des Anspruches 1 gelöst.

Man erkennt, daß die Erfindung jedenfalls dann verwirklicht ist, wenn die miteinander zusammenarbeitenden Gelenkkörper Durchbrüche besitzen, die in bestimmten Relativlagen der Gelenkkörper miteinander korrespondieren bzw. Fluchten und in die ein Sperrkörper einbringen bzw. aus ihnen herausnehmbar ist, so daß die Gelenkkörper fest bzw. schwenkbar miteinander verbindbar sind.

Eine spielfreie Verriegelung der beiden Gelenkteile ergibt sich dadurch, daß die Gelenkteile paarweise mit ihrer Flachseite zu einem Gelenk zusammengesetzt werden, was eine wechselseitige Überschneidung der Längskanten der Rastausnehmungen bewirkt. An diesen Kanten greifen gleichzeitig die ebenfalls abgesetzten Keilflächen der Sperrkörper aufgrund der komplementären Gestaltung von Ausnehmung zur Keilfläche am oberen und am unteren Gelenkkörper an.

Weitere zweckmäßige und vorteilhafte Ausgestaltungen der Erfindung gehen aus den Unteransprüchen hervor.

Eine besonders zweckmäßige Ausgestaltung der Erfindung sieht vor, daß der Steuerkörper die Form einer Steuerscheibe besitzt, die eine etwa mittige Öffnung aufweist und bei der die Steuerkurven von Steuernoppen bzw. Hubschrägen gebildet sind. Im Rahmen dieses Erfindungsgedankens ist es besonders zweckmäßig, wenn der Rastkörper von einer Rastplatte mit einem mit der Gelenkachse koaxial verlaufenden und angeformten Hohlzylinder, der die Öffnung des Steuerkörpers durchquert, gebildet ist. Um sicherzustellen, daß der Rastkörper in die miteinander zusammenarbeitenden Ausnehmungen der Gelenkteile eingreift, ist es zweckmäßig, wenn der Hohlzylinder zu den Gelenkkörpern gerichtet ist und eine den Rastkörper gegen den Steuerkörper drückende Druckfeder aufnimmt.

Eine weitere zweckmäßige Ausgestaltung der Erfindung sieht vor, daß zwischen dem Steuerkörper und dem Rastkörper eine Rückstellfeder angeordnet ist, die bestrebt ist, die beiden Körper so gegeneinander zu verdrehen, daß zwischen der Steuerkurve bzw. Druckfläche des Steuerkörpers und der mit ihr zusammenarbeitenden Druckfläche bzw. Steuerkurve des Rastkörpers eine druckfreie Verbindung herrscht. Durch ein Verdrehen des Steuerkörpers bewegt sich der Rastkörper weg von dem Gelenkteil, gegen das er durch die Druckfeder gedrückt wird.

Eine weitere zweckmäßige Ausgestaltung sieht vor, daß der in Aufsicht etwa kreisrunde Rastkörper mindestens eine mit Abstand zur Gelenkachse verlaufende Ausnehmung besitzt, deren eines Ende in eine Druckfläche bzw. Steuerkurve ausläuft, in die ein axial vorstehender und die Steuerkurve aufweisender Steuernocken eingreift.

Bei einem Rastgelenk mit einem zwei Sperrkörper aufweisenden Rastkörper ist es zweckmäßig, wenn der Steuerkörper Ausnehmungen für die ihn durchquerenden Sperrkörper sowie mindestens einen radial verlaufenden Steuerseilanschluß besitzt. Dieser Steuerseilanschluß kann für aus dem Rastgelenk herausgeführte Steuerseile vorgesehen sein.

Eine weitere zweckmäßige Ausgestaltung der Erfindung sieht vor, daß die Steuerkurven des Steuerkörpers Rastkerben besitzen, die mit den Rastkanten aufweisenden Druckflächen des Rastkörpers verrastbar sind. Durch diese Maßnahme wird erreicht, daß der Steuerkörper nach Entriegelung eine stabile Rastposition einnehmen kann.

Eine weitere zweckmäßige Ausgestaltung sieht vor, daß die von einem Drehelement mit einem Sicherungsring zusammengehaltenen Gelenkteile sowie die Verriegelung in einem aus zwei schalenartigen Teilen bestehenden Gehäuse untergebracht sind. Diese Gehäuseteile können z.B. mittels einer Schraube oder Niete verbindbar sein.

Um schnell feststellen zu können, ob die Sperrkörper eine wirksame oder eine unwirksame Arbeitsstellung eingenommen haben, ist es zweckmäßig, wenn das eine Gehäuseteil mindestens ein Schaltstellungsfenster besitzt und eine mit dem Steuerkörper zusammenarbeitende Schaltstellungsanzeige aufnimmt, die im Bereich des Schaltstellungsfensters angeordnet ist. Die Schaltstellungsanzeige kann mehrere farblich abgesetzte Abschnitte besitzen, die beim Verstellen des Steuerkörpers mitgeführt werden, so daß der Benutzer aufgrund des im Schaltstellungsfensters befindlichen farblichen Abschnittes die Arbeitsposition des Rastgelenkes erfahren kann.

Eine weitere zweckmäßige Ausgestaltung sieht vor, daß das Gehäuseteil eine Ausnehmung besitzt, in der ein Bolzen, eine Lasche oder eine Schraube verschiebbar ist, deren eines Ende mit dem Steuerkörper verbindbar ist, während das andere Ende mit einem außerhalb des Gehäuseteiles angeordneten Schaltknopf, durch den der Steuerkörper verstellbar ist, verbunden ist. Die Betätigung des Steuerkörpers kann jedoch auch mittels eines Bowdenzuges erfolgen. Hierfür ist vorgesehen, daß der Steuerkörper zwei radial vorstehende Steuerseilanschlüsse besitzt, die mittels des Bowdenzuges betätigbar sind.

Bei einem Rastgelenk, dessen Gelenkteile mit den Holmen durch Steckverbindung verbindbar sind, ist es zweckmäßig, wenn jedes Gelenkteil einen Gelenkarm besitzt, dessen Außenumriß etwa dem Innenumriß des ihn aufnehmenden Holmes entspricht, und wenn zwischen dem Gelenkarm und der Innenwand des Holmes ein Einschubprofil angeordnet ist. Hierbei ist es zweckmäßig, wenn der plattenförmige Gelenkarm Einschubprägungen und mindestens eine Sprossenaufnahme aufweist und wenn das Einschubprofil mindestens eine Sprossenaufnahme sowie holmenseitige und gelenkarmseitige Einschubprägungen besitzt. Dadurch wird ein dübelähnlicher Effekt erreicht, der ein Verkeilen bzw. Verpressen von Gelenkarm, Einschubprofil und Holm bewirkt.

Einige Ausführungsbeispiele der Erfindung sind in der Zeichnung schematisch dargestellt und werden im folgenden näher erläutert. Es zeigen:

Fig. 1 einen Teil einer Doppelsprossenleiter mit zwei Gelenken,

Fig. 2 das in Fig. 2 dargestellte Gelenk in Explosionsdarstellung,

Fig. 3, 4 und 5 den Steuerkörper in Aufsicht und in Seitenansichten,

Fig. 6, 7 und 8 den Rastkörper in Aufsicht und in Seitenansichten,

Fig. 9 ein Drehelement in Aufsicht,

Fig. 10 einen Schnitt entlang der Linie X-X nach Fig. 9,

Fig. 11 eine Schaltstellungsanzeige in Aufsicht,

Fig. 12 einen Schnitt entlang der Linie XII-XII nach Fig. 11,

Fig. 13 eine Seitenansicht der Schaltstellungsanzeige nach Fig. 11 in Richtung des Pfeiles XIII,

Fig. 14 ein Gehäuseteil in Aufsicht,

Fig. 15 einen Schnitt durch das Gehäuseteil nach Fig. 14 entlang der Linie XV-XV,

Fig. 16 eine Seitenansicht des Gehäuseteiles nach Fig. 14 in Richtung des Pfeiles XVI,

Fig. 17 ein Gelenkteil in Aufsicht,

Fig. 18 einen Schnitt des Gelenkteiles entlang der Linie XVIII-XVIII nach Fig. 17,

Fig. 19 eine Ansicht des Gelenkteiles in Richtung des Pfeiles XIX nach Fig. 17,

Fig. 20 ein Einschubprofil in Aufsicht,

Fig. 21 eine Seitenansicht des Einschubprofiles in Richtung des Pfeiles XXI nach Fig. 20,

Fig. 22 eine Stirnansicht des Einschubprofils in Richtung des Pfeiles XXII nach Fig. 20,

Fig. 23 einen Abschlußknopf,

Fig. 24 einen Schnitt durch den Abschlußknopf nach Fig. 23 entlang der Linie XXIV-XXIV, und

Fig. 25 einen Fixiereinsatz für einen Bowdenzug.

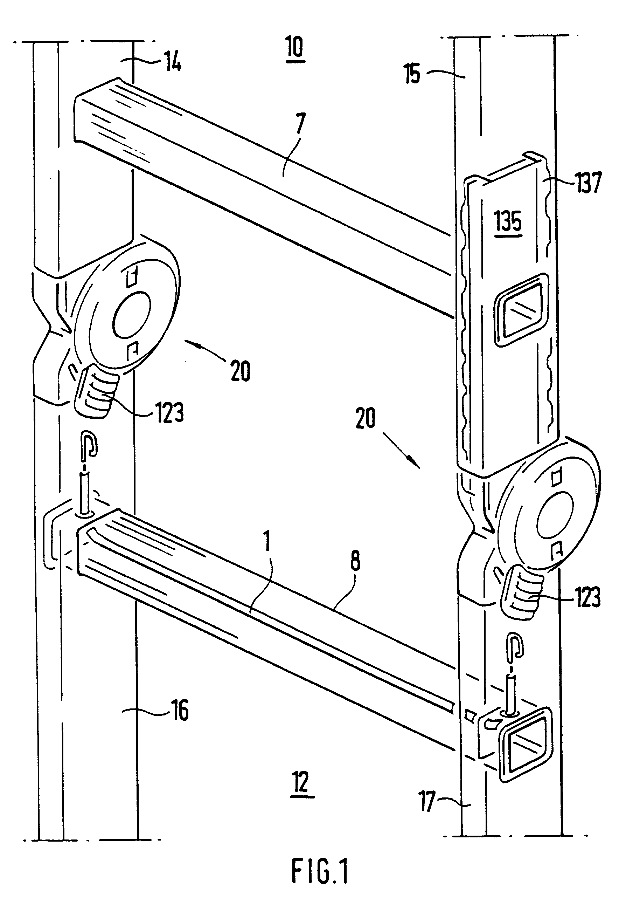

Fig. 1 zeigt einen Teil einer Doppelsprossenleiter mit zwei Rastgelenken 20. Die Doppelsprossenleiter besitzt zwei Leiterteile 10 und 12 mit Sprossen 7 und 8, deren Längsholme 14,15 bzw. 16,17 miteinander über die Gelenke 20 verbunden sind. Die Gelenke 20 sind mit den Holmen 14 und 16 bzw. 15 und 17 über ihre Gelenkarme 135 und Einschubprofile 137 fest verbunden.

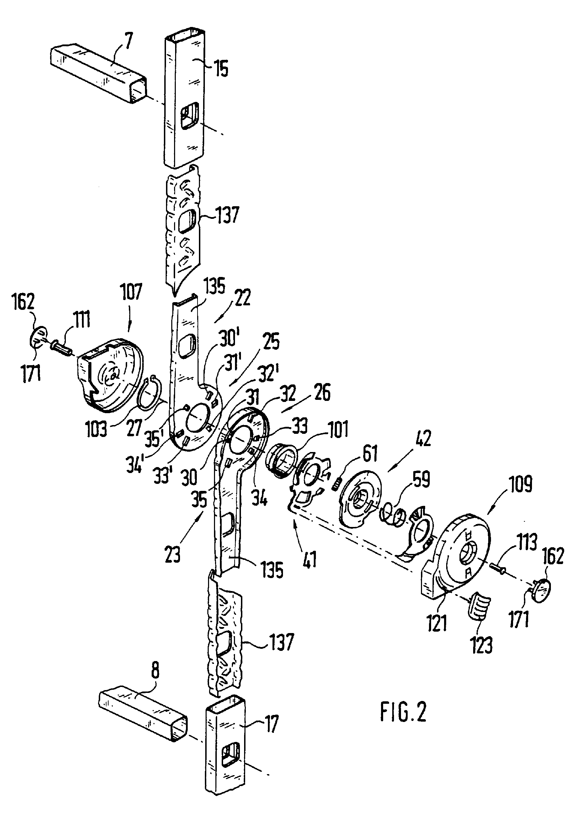

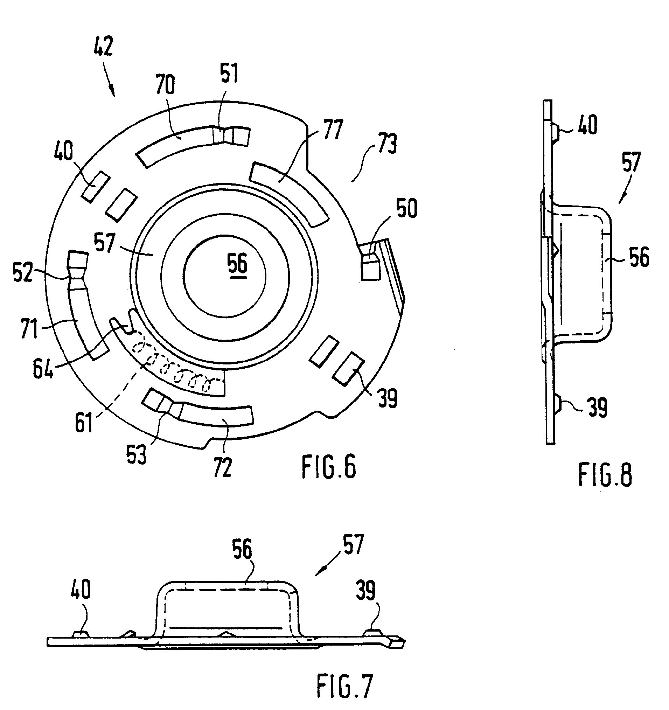

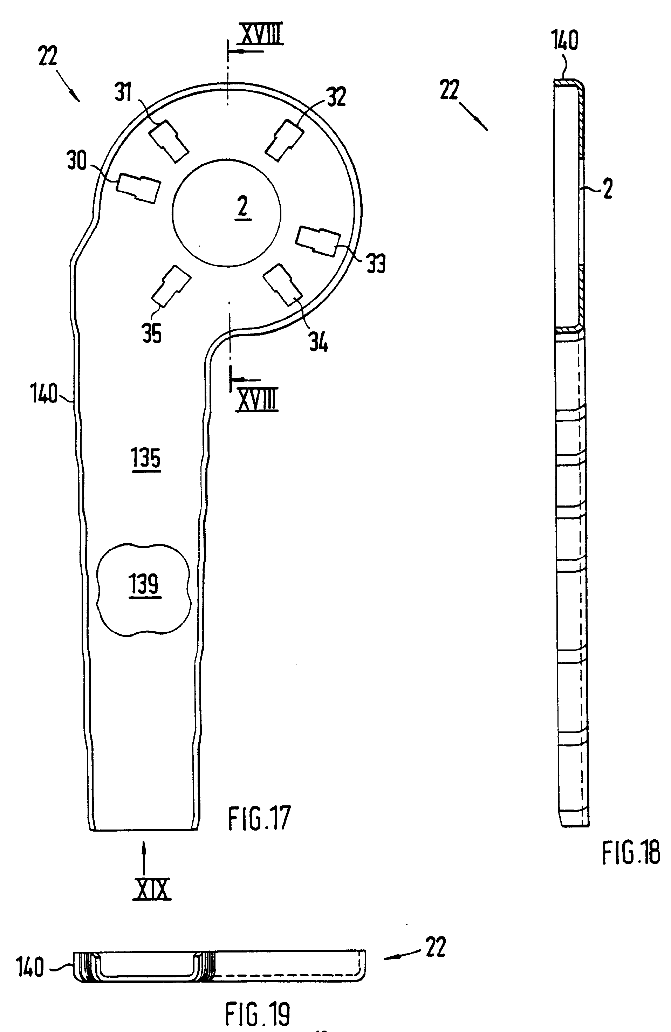

Wie die Fig. 2 erkennen läßt, laufen die Längsholme 15 und 17 an ihren Verbindungsstellen in gelenkig miteinander verbindbare Gelenkteile 22 und 23 mit Gelenkkörpern 25 und 26 aus, die um die Gelenkachse 27 verteilte Ausnehmungen 30,31, 32,33, 34 und 35 bzw. 30',31', 32',33', 34' und 35' (vgl. auch Fig. 17) besitzen, wobei in der Arbeitsstellung des Rastgelenkes jeweils mindestens eine Ausnehmung 30,31, 32,33, 34 und 35 des Gelenkkörpers 26 mit jeweils mindestens einer Ausnehmung 30',31', 32',33', 34' und 35' des Gelenkkörpers 25 zusammenarbeitet, indem sie von mindestens einem eine wirksame und eine unwirksame Arbeitsstellung einnehmenden Sperrkörper 39 und 40 (vgl. Fig. 6, 7 und 8) einer von außen her betätigbaren Verriegelung durchquert und gegeneinander unverrückbar gehalten sind.

Die Verriegelung besteht aus einem um die Gelenkachse 27 verdrehbaren Steuerkörper 41 mit vier Steuerkurven 43,44, 45 und 46 und einem die Sperrkörper 39 und 40 besitzenden, gegen die Gelenkkörper 25 und 26 gedrückten und vom Steuerkörper betätigbaren Rastkörper 42 mit vier als Steuerstege ausgebildeten Druckflächen 50,51, 52 und 53, die beim Verdrehen des Steuerkörpers 41 mit dessen Steuerkurve zusammenarbeiten und den Rastkörper 42 von den Gelenkkörpern 25 und 26 weg bewegt, bis die Sperrkörper 39 und 40 die Ausnehmungen 30,31, 32,33, 34 und 35 freigeben.

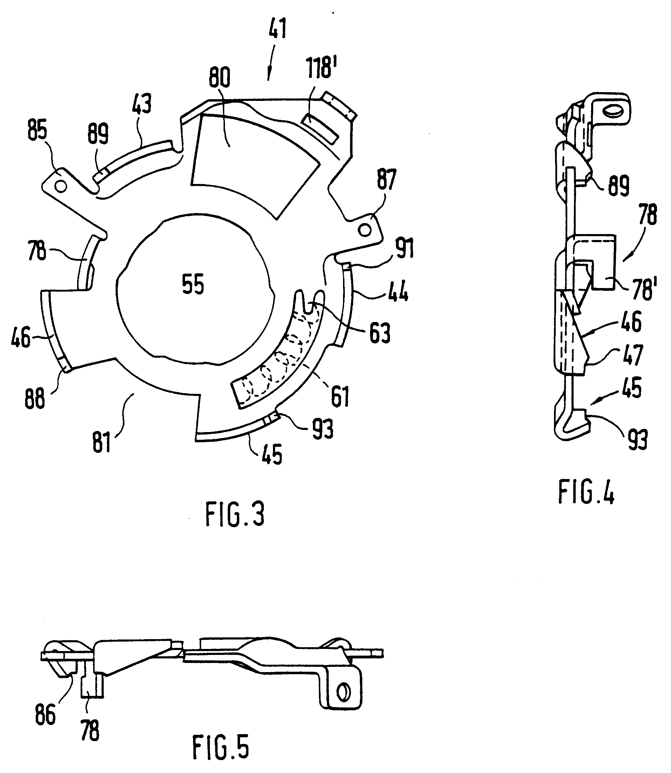

Wie die Fig. 3, 4 und 5 erkennen lassen, hat der Steuerkörper 41 die Form einer Steuerscheibe, die eine etwa mittige Öffnung 55 besitzt und bei der die Steuerkurven 43, 44, 45 und 46 als Steuernocken, Hubschrägen, Steuerkuppen oder Steuersteglagern ausgebildet sind.

Die Fig. 6, 7 und 8 zeigen, daß der Rastkörper 42 von einer Rastplatte mit einem mit der Gelenkachse 27 koaxial verlaufenden und angeformten Hohlzylinder 57, der die Öffnung 55 des Steuerkörpers 41 durchquert, gebildet ist. Der Hohlzylinder 57 mit einer kreisrunden Bohrung 56 ist zu den Gelenkkörpern 25 und 26 gerichtet und nimmt eine den Rastkörper 42 gegen den Steuerkörper 41 drückende Druckfeder 59 auf (vgl. auch Fig. 2). Der Durchmesser der Bohrung 56 ist kleiner als der Außendurchmesser der Schraubenfeder 59. Zwischen dem Steuerkörper 41 und dem Rastkörper 42 ist eine Rückstellfeder 61 angeordnet, die bestrebt ist, die beiden Körper 41 und 42 so gegeneinander zu verdrehen, daß zwischen den Steuerkurven 43, 44, 45 und 46 des Steuerkörpers 41 und den Steuerstegen 50,51, 52 und 53 des Rastkörpers 42 eine druckfreie Verbindung herrscht. Die Rückstellfeder 61 ist zwischen einem etwa tangential ausgerichteten Vorsprung 63 des Steuerkörpers 41 und einem etwa tangential ausgerichteten Vorsprung 64 des Rastkörpers 42, die aufeinander zu gerichtet sind, eingespannt. Der in Aufsicht etwa kreisrunde Rastkörper 42 besitzt mehrere mit Abstand zur Gelenkachse 27 verlaufende Ausnehmungen 70,71, 72 und 73. Jeweils ein umfangsseitiges Ende jeder Ausnehmung 70, 71,72 und 73 läuft in jeweils eine zu der zugeordneten Steuerkurve 43, 44, 45 und 46 abfallende Druckfläche 50,51, 52 und 53, wobei in die Ausnehmungen 70,71, 72 und 73 jeweils ein axial vorstehender Steuernocken eingreift, der die jeweilige Steuerkurve 43, 44, 45 und 46 aufweist.

Der Rastkörper 42 weist ferner eine weitere Ausnehmung 77 für einen hakenförmigen Führungskörper 78 mit einem tangential ausgerichteten Schenkel 78′ des Steuerkörpers 41 auf. Da am Rastkörper 42 zwei Sperrkörper 39 und 40, die sich zu ihren freien Enden hin verjüngen, befestigt sind, sind im Steuerkörper 41 zwei Ausnehmungen 80 und 81 für die ihn durchquerenden Sperrkörper 39 und 40 vorgesehen. Die Sperrkörper 39 und 40 besitzen jeweils zwei Befestigungszapfen, über die sie mit dem Rastkörper 42 unverrückbar verbindbar sind. Man erkennt, daß sie sich zu ihren freien Enden hin keilförmig verjüngen. Die Ausnehmungen 80 und 81 sind so bemessen, daß der Steuerkörper 41 von einer Schaltstellung in die andere versetzt werden kann, ohne daß die Sperrkörper 39, 40 von ihm mitgenommen werden. Ferner besitzt der Steuerkörper 41 zwei Steuerseilanschlüsse 85 und 87 für einen nicht näher dargestellten Bowdenzug. Die Steuerkurven 43, 44, 45 und 46 des Steuerkörpers 41 besitzen Steuerkuppen 86,89, 91 und 93, die mit den Rastkanten aufweisenden Steuerstegen 50,51, 52 und 53 des Rastkörpers 42 verrastbar sind.

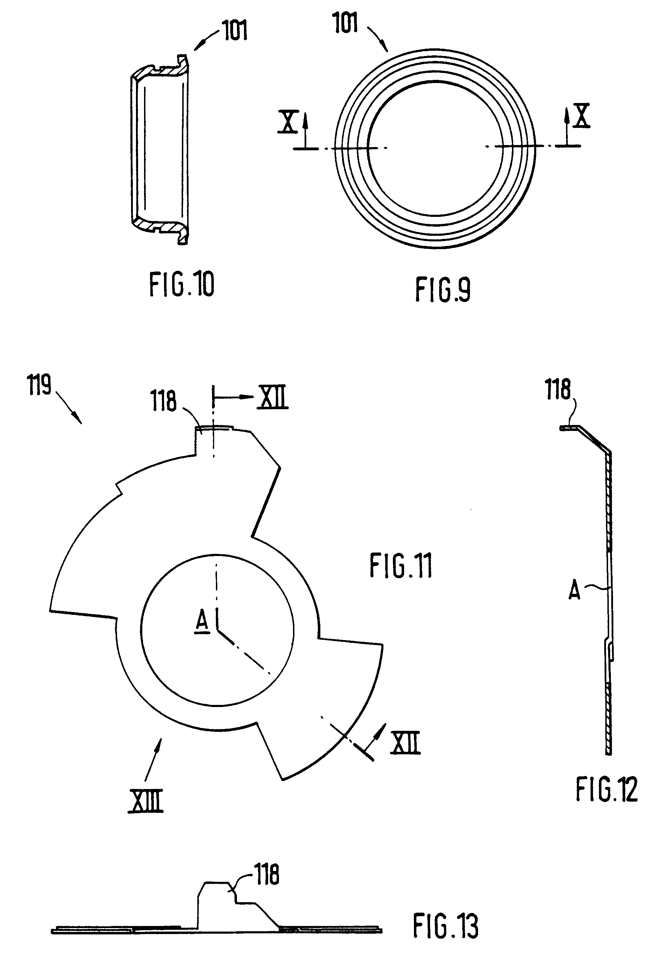

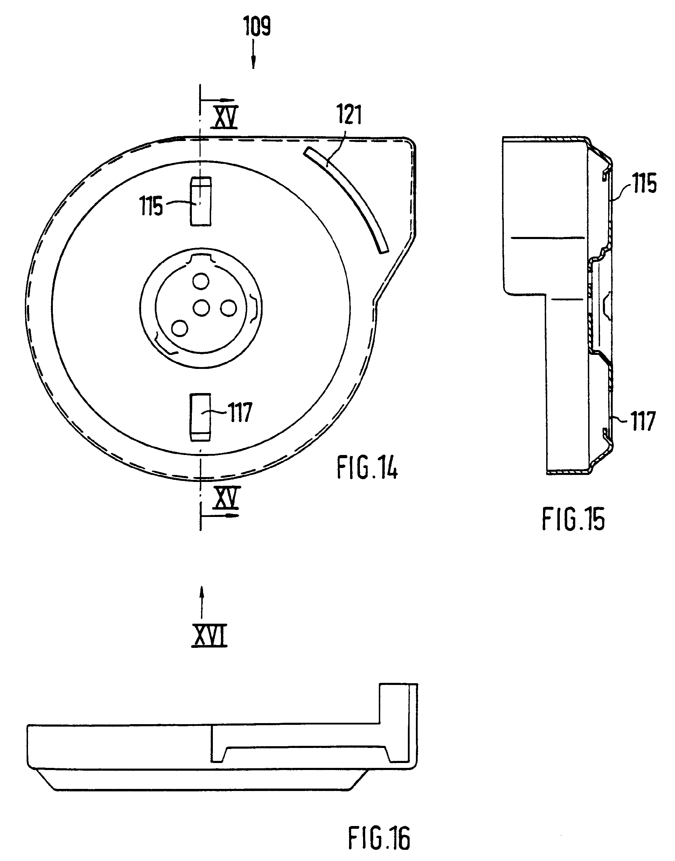

Ferner lassen die Fig. 14 bis 16 in Verbindung mit Fig. 2 erkennen, daß die von einem Drehelement 101 mit einem Sicherungsring 103 (vgl. auch Fig. 9 und 10) zusammengehaltenen Gelenkteile 22 und 23 sowie die Verriegelung in einem aus zwei schalenartigen Teilen 107 und 109 bestehenden Gehäuse untergebracht sind. Die Gehäuseteile 107 und 109 sind mittels einer Nutverbindung 111, 113 lösbar verbindbar. Das Gehäuseteil 109 besitzt zwei Schaltstellungsfenster 115 und 117 und nimmt eine mit dem Steuerkörper 41 zusammenarbeitende Schaltstellungsanzeige (Fig. 11,12 und 13) auf, die im Bereich der Schaltstellungsfenster 115 und 117 angeordnet ist. Das Gehäuseteil 109 besitzt ferner eine schlitzförmige Ausnehmung 121, in der ein Verbindungselement verschiebbar ist, dessen eines Ende mit dem Rastkörper 41 verbindbar ist, während das andere Ende mit einem außerhalb des Gehäuseteiles 109 angeordneten Schaltknopf 123 (vgl. Fig. 2), durch den der Steuerkörper 41 verstellbar ist, verbunden ist. Die Schaltstellungsanzeige 119 besitzt einen Mitnahmezapfen 118, der in den Ausschnitt 118′ (vgl. Fig. 3) des Steuerkörpers 41 eingreift. Beim Verdrehen des Steuerkörpers 41 wird die Schaltstellungsanzeige 119 mitgenommen, so daß in den Schaltstellungsfenstern 115 und 117 ein Feld mit bestimmter Farbe, z.B. grün oder rot, erscheint, das angibt, ob die Sperrkörper 39 und 40 mit den Ausnehmungen zusammenarbeiten oder diese freigeben.

Die Fig. 17, 18 und 19 lassen i.V.m. Fig. 1 erkennen, daß das Gelenkteil 22 mit dem Holm 15 durch Steckverbindung verbindbar ist. Das Gelenkteil 22 besitzt einen Gelenkarm 135, dessen Außenumriß etwa dem Innenumriß des ihn aufnehmenden Holmes entspricht, und der sich zu seinem freien Ende hin stufenförmig verjüngt. Der plattenförmige Gelenkarm 135 weist eine Sprossenaufnahme 139 in Wulstkontur auf. Die Festigkeit des Gelenkteiles 22 ist durch eine umlaufende Abkantung 140 erhöht. Das schalenförmige Gelenkteil 22 besitzt eine mittige und kreisrunde Öffnung 2 für das Drehelement 101.

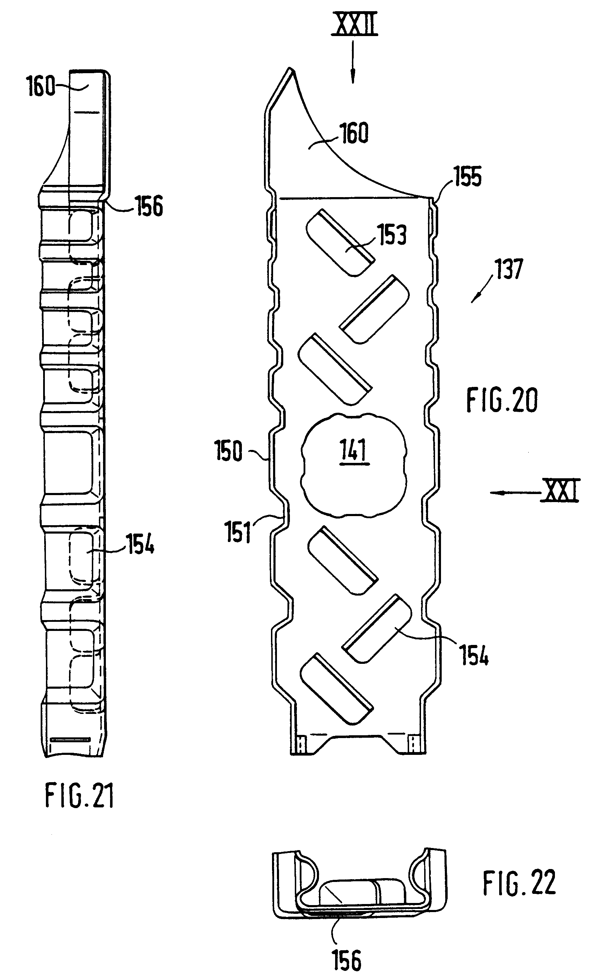

Die Fig. 20, 21 und 22 zeigen ein Einschubprofil 137 mit einer Sprossenaufnahme 141 in Wulstkontur. Das Einschubprofil besitzt holmseitige und gelenkarmseitige Einschubprägungen 150 bzw. 151 sowie Abstandshalter 153 und 154 und eine Holmeinschubbegrenzung 156. Das obere Ende des Einschubprofiles 137 läuft in eine Lagerfixierung 160 des Gelenkarmes 135 aus. Das Einschubprofil 137 ist zwischen dem Gelenkarm 135 und der Innenwand des Holmes 15 eingespannt und verkeilt (vgl. auch Fig. 1 und 2).

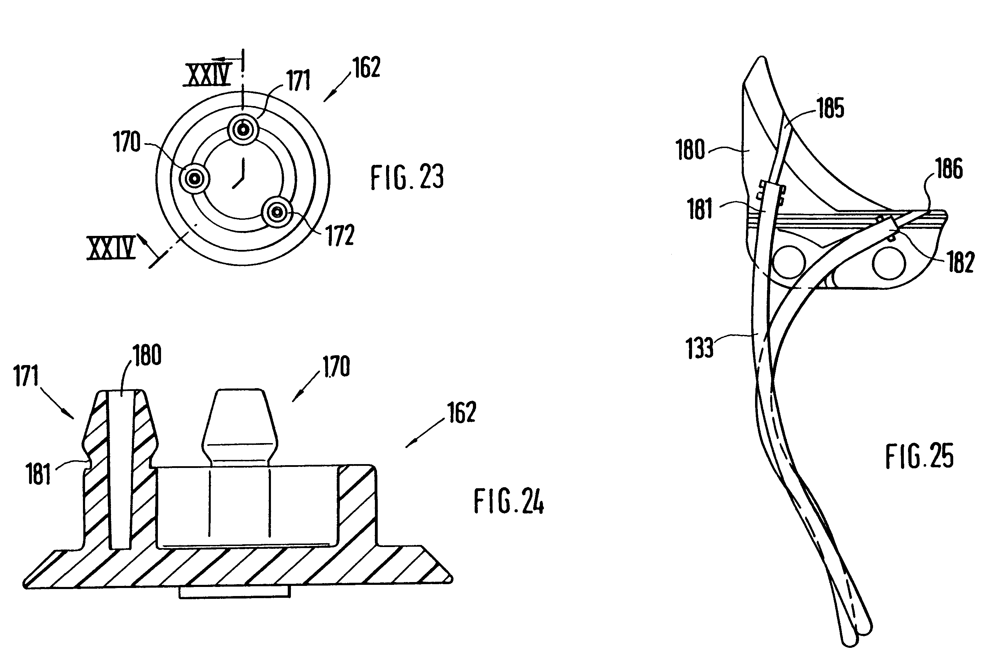

Die Fig. 23 und 24 zeigen i.V.m. Fig. 2 einen Verschlußknopf mit Zapfen 170, 171 und 172, die sich zu ihren Enden hin verjüngen, jeweils eine koaxiale Ausnehmung 180 sowie jeweils eine ringförmige Außennut 181 besitzen. Dieser Verschluß ist mit dem Gehäuseteil 109 lösbar verbindbar.

Schließlich zeigt die Fig. 25 einen Teil eines Bowdenzuges 133 mit einem Fixiereinsatz 180. Die Enden des Bowdenzuges 181 und 182 sind in dem Fixiereinsatz 180 festgehalten, während die Seile 185 und 186 mit den Steuerseilanschlüssen 85 und 87 (vgl. Fig. 3) verbindbar sind. Dadurch ist es möglich, den Steuerkörper 41 in beiden Richtungen zu bewegen.

Die in den Fig. 11, 12 und 13 gezeigte Schaltstellungsanzeige 119 mit der kreisrunden Öffnung A zeigt i.V.m. dem Gehauseteil 109 die momentane Schaltsituation (Ist-Zustand) des Gelenkmechanismus optisch an. Dies erfolgt über Signalfarben, die in den Sichtfenstern 115 und 117 des Gehäuseteiles 109 entsprechend der Schaltstellung 109 sichtbar werden. Die Signalfarben sind den üblichen Farben einer Verkehrsampel angepaßt und befinden sich im Blickfeld des Benutzers. Grün bedeutet: die Gelenkmechanik ist verriegelt und die Leiter kann benutzt werden. Zeigt die Schaltstellungsanzeige 119 rot an, dann sind die Gelenkteile gegeneinander verschwenkbar, d.h. nicht verrastet. Solange sich der Schaltknopf 123 am einen Ende der Ausnehmung 121 befindet, nehmen die Sperrkörper 39 und 40 eine unwirksame Stellung ein. Diese Stellung des Schaltknopfes 123 kann auch durch den in Fig. 1 dargestellten Bowdenzug 1 eingestellt werden. Abhängig davon, wieviel Ausnehmungen bzw. Durchbrüche die einzelnen Gelenkteile 22 und 23 besitzen, können verschiedene Arbeitspositionen der Leiter eingestellt werden.

Der in Fig. 1 dargestellte Bowdenzug wird bei Einhandbedienung eingebaut, dann können gleichzeitig beide Rastkörper betätigt werden.

Das Rastgelenk funktioniert wie folgt:
Der Steuerkörper 41, der durch den zylindrischen Vorsprung des Rastkörpers 42 in zentrischer Lage gehalten ist, wird durch den Schaltknopf 123 um etwa 30° entgegen der Kraftwirkung der Rückstellfeder 61 bis zum Anschlag gedreht. Während dieses Drehvorganges schieben sich die Steuerkurven 43, 44, 45 und 46 des Steuerkörpers 41 unter die Druckflächen der Steuerstege des Rastkörpers 42 und verschieben diese entgegen der Kraftwirkung der Druckfeder 59 entlang der Hubschräge bis zu den Steuersteglagern 86, 89, 91 und 93 hin. In dieser Stellung kann sich der Steuerkörper 41, der durch die Rückstellfeder 61 gespannt ist, nicht zurückdrehen, da die Rastkanten der Steuerstege mit den Steuerkuppen zusammenarbeiten und so unter der Kraft der Einrastfeder eine Rastwirkung erzielt wird. Werden die Gelenkteile 22 und 23 gegeneinander gedreht, so werden die von dem Rastkörper 42 getragenen und sich zu ihren Enden hin verjüngenden Sperrkörper, die hierbei teilweise in den Gelenkkörper 25 einragen, vollständig aus ihm entlang der Gleitschräge herausgedrückt. Zwangsläufig werden bei diesem Bewegungsablauf auch die Steuerstege des Rastkörpers mit angehoben und so die Rastverbindung zwischen den Steuerkuppen und Rastkanten des Steuersteglagers gelöst. In dieser Arbeitsstellung wird der Steuerkörper durch die gespannte Rückstellfeder um ca. 15° bis zum Anschlag der Schaltstellungssteuerung zurückgedreht.

Haben die beiden Gelenkteile 22 und 23 eine vorgesehene Winkelstellung zueinander eingenommen, in der die Ausnehmungen fluchten, so schnellen die Sperrkörper 39 und 40 in diese hinein und blockieren so die beiden Gelenkteile. Gleichzeitig wird während dieser Abwärtsbewegung der Schaltstellungsanschlag 41 von dem Rastkörper 42 unterlaufen. Dadurch kann der Steuerkörper 41 vollstandig in die Ausgangsstellung zurückgedreht und den Rastkörper 42 verriegeln. Der Schaltstellungsanzeiger wird während dieses Funktionsablaufes durch den Steuerkörper mitgeführt und zeigt so die jeweilige Schaltsituation sofort an.

Die durch die Erfindung erzielten Vorteile kann man wie folgt zusammenfassen:
a) vollkommen geschlossenes Gelenk, so daß kein Schmutz in das Gelenk eintreten kann;
b) glatte Außenflächen und Übergänge zwischen den Holmen und dem Gelenk, so daß keine scharfen Kanten und Schürfstellen vorhanden sind;
c) optische Anzeige der jeweiligen Schaltstellung führt zur Erhöhung der Sicherheit;
d) kein langer Betätigungshebel, so daß keine Klemmgefahr beim Einrasten besteht;
e) mögliche Transportverriegelung, so daß kein unbeabsichtigtes Aufklappen der Leiter beim Transport z.B. im Kofferraum oder auf dem Autodach möglich ist;
f) Blocksicherung der Schaltmechanik bei Benutzung der Leiter führt dazu, daß ein irrtümliches Schalten des Gelenkes ausgeschlossen werden kann;
g) mögliche Einhandbedienung mittels eines Bowdenzuges, was zur rationellen Betätigung der einzelnen Leiterteile führt, weil pro Gelenkachse nur das Steuergelenk betätigt werden muß;
h) bei weiteren Ausgestaltungen des Gelenkes besteht die Möglichkeit der Programmierung. Die Mechanik rastet nur in vorgewählte Positionen ein. Dies führt zur schnelleren Handhabung, z.B. Aufstellen und Abbauen der Leiter. Bisher mußten beim Aufstellen der Leiter alle in Aufstellwinkelbereichen vorhandenen Positionen berücksichtigt werden;
i) Schaltübertragung bei Einhandbetrieb erfolgt über einen flexible Bowdenzug, so daß eine beliebige Anordnung der einzelnen Rastgelenke zueinander möglich ist. Dies ist z.B. bei den sogenannten Universalleitern der Fall, die gewöhnlich drei Paar Gelenke besitzen;

j) Schaltung am Gelenk (Ausrastung) kann wieder rückgängig (Einrastung) gemacht werden, ohne die Leiter extra bewegen zu müssen;

k) Zugang zum Schalthebel des Gelenkes in jede beliebige Position der Leiter.

**Patentansprüche**

1. Rastgelenk für eine Mehrzweckleiter aus mindestens zwei Leiterteilen (10, 12), deren Längsholme (14, 15; 16, 17) an den Verbindungsstellen in gelenkig miteinander verbindbare Gelenkteile (22, 23) mit Gelenkkörpern (25, 26) auslaufen, die um die Gelenkachse (27) verteilte Ausnehmungen (30, 35) besitzen, wobei in der Arbeitsstellung des Rastgelenkes jeweils mindestens eine Ausnehmung (30 - 35) des einen Gelenkkörpers (26) mit jeweils mindestens einer Ausnehmung (30' - 35') des anderen Gelenkkörpers (25) zusammenarbeitet, indem sie von mindestens einem eine wirksame und eine unwirksame Arbeitsstellung einnnehmenen Sperrkörper (39, 40), einer von außen her betätigbaren Verriegelung durchquert und gegeneinander unverrückbar gehalten sind, wobei die Verriegelung aus einem um die Gelenkachse (27) verdrehbaren Steuerkörper (41) mit mindestens einer Steuerkurve (43, 44, 45) bzw. Druckfläche und einem den Sperrkörper (39, 40) besitzenden, gegen die Gelenkkörper (25, 26) gedrückten und vom Steuerkörper (41) betätigbaren Rastkörper (42) mit mindestens einer Druckfläche (50, 51, 52, 53) bzw. Steuerkurve besteht.

dadurch gekennzeichnet,

daß die Druckfläche (50,51,52,53) bzw. Steuerkurve des Rastkörper (42) beim Verdrehen des Steuerkörpers (41) mit dessen Steuerkurve (43, 44, 45) bzw. Druckfläche zusammenarbeitet und den Rastkörper (42) von den Gelenkkörpern (25, 26) axial weg bewegt, bis der Sperrkörper (39, 40) die Ausnehmungen (30, 31, 32, 33, 34, 35) freigibt.

2. Rastgelenk nach Anspruch 1,

dadurch gekennzeichnet,

daß der Steuerkörper (41) die Form einer Steuerscheibe besitzt, die eine etwa mittige Öffnung (55) besitzt und bei der die Steuerkurven (43,44,45) von Steuernocken bzw. Hubschrägen gebildet sind.

3. Rastgelenk nach Anspruch 1 oder 2,

dadurch gekennzeichnet,

daß der Rastkörper (42) von einer Rastplatte mit einem mit der Gelenkachse (27) koaxial verlaufenden und angeformten Hohlzylinder (57), der die Öffnung (55) des Steuerkörpers (41) durchquert, gebildet ist.

4. Rastgelenk nach Anspruch 3,

dadurch gekennzeichnet,

daß der Hohlzylinder (57) zu den Gelenkkörpern (25,26) gerichtet ist und eine den Rastkörper (42) gegen den Steuerkörper (41) drückende Druckfeder (59) aufnimmt.

5. Rastgelenk nach einem der Ansprüche 1 bis 4,

dadurch gekennzeichnet,

daß zwischen dem Steuerkörper (41) und dem Rastkörper (42) eine Rückstellfeder (61) angeordnet ist, die bestrebt ist, die beiden Körper (41,42) so gegeneinander zu verdrehen, daß zwischen der Steuerkurve (43,44,45) bzw. Druckfläche des Steuerkörpers (41) und der Druckfläche (50,51, 52,53) bzw. Steuerkurve des Rastkörpers (42) eine druckfreie Verbindung herrscht.

6. Rastgelenk nach einem der Ansprüche 1 bis 5,

dadurch gekennzeichnet,

daß die Rückstellfeder (61) zwischen einem etwa tangential ausgerichteten Vorsprung (63) des Steuerkörpers (41) und einem etwa tangential ausgerichteten Vorsprung (64) des Rastkörpers (42), die aufeinander zu gerichtet sind, eingespannt ist.

7. Rastgelenk nach einem der Ansprüche 1 bis 6,

dadurch gekennzeichnet,

daß der in Aufsicht etwa kreisrunde Rastkörper (42) mindestens eine mit Abstand zur Gelenkachse (27) verlaufende Ausnehmung (70,71, 72,73) besitzt, deren eines Ende in eine Druckfläche (50,51, 52,53) bzw. Steuerkurve ausläuft, in die ein axial vorstehender und die Steuerkurve (43,44,45) bzw. Druckfläche aufweisender Steuernocken eingreift.

8. Rastgelenk nach einem der Ansprüche 1 bis 7,

dadurch gekennzeichnet,

daß der Rastkörper (42) mindestens zwei Ausnehmungen (70,71, 72,73) besitzt.

9. Rastgelenk nach einem der Ansprüche 1 bis 8,

dadurch gekennzeichnet,

daß der Rastkörper (42) eine weitere Ausnehmung (77) für einen Steuerungskörper (78) des Steuerkörpers (41) aufweist.

10. Rastgelenk nach einem der Ansprüche 1 bis 9 mit einem zwei Sperrkörper aufweisenden Rastkörper, dadurch gekennzeichnet,
daß der Steuerkörper (41) Ausnehmungen (80,81) für die ihn durchquerenden Sperrkörper (39,40) sowie mindestens einen radial verlaufenden Steuerseilanschluß (85,87) besitzt.

11. Rastgelenk nach einem der Ansprüche 1 bis 10,
dadurch gekennzeichnet,
daß die Steuerkurve (43,44,45) des Steuerkörpers (41) Rastkerben (89,91,93) besitzen, die mit den Rastkanten aufweisenden Druckflächen (50,51, 52,53) des Rastkörpers (42) verrastbar sind.

12. Rastgelenk nach einem der Ansprüche 1 bis 11,
dadurch gekennzeichnet,
daß die durch ein Drehelement (101) mit einem Sicherungsring (103) zusammengehaltenen Gelenkteile (22,23) sowie die Verriegelung in einem aus zwei schalenartigen Teilen (107,109) bestehenden Gehäuse untergebracht sind.

13. Rastgelenk nach Anspruch 12,
dadurch gekennzeichnet,
daß die Gehäuseteile mittels einer Schraube (111) oder Niete (113) verbindbar sind.

14. Rastgelenk nach Anspruch 12 oder 13,
dadurch gekennzeichnet,
daß das eine Gehäuseteil (109) mindestens ein Schaltstellungsfenster (115,117) besitzt und eine mit dem Steuerkörper (41) zusammenarbeitende Schaltstellungsanzeige (119) aufnimmt, die im Bereich des Schaltstellungsfenster (115,117) angeordnet ist.

15. Rastgelenk nach einem der Ansprüche 12 bis 14,
dadurch gekennzeichnet,
daß das Gehäuseteil (109) eine Ausnehmung (121) besitzt, in der ein Bolzen oder eine Schraube verschiebbar ist, deren eines Ende mit dem Steuerkörper (41) verbindbar ist, während das andere Ende mit einem außerhalb des Gehäuseteiles (109) angeordneten Schaltknopf (123), durch den der Steuerkörper (41) verstellbar ist, verbunden ist.

16. Rastgelenk nach einem der Ansprüche 1 bis 15,
dadurch gekennzeichnet,
daß der Steuerkörper (41) zwei radial vorstehende Steuerseilanschlüsse (85,87) besitzt, die mittels eines Bowdenzuges (133) betätigbar sind.

17. Rastgelenk nach einem der Ansprüche 1 bis 16, dessen Gelenkteile mit den Holmen durch Steckverbindung verbindbar sind,
dadurch gekennzeichnet,
daß jedes Gelenkteil (22,23) einen Gelenkarm (135) besitzt, dessen Außenumriß etwa dem Innenumriß des ihn aufnehmenden Holmes (14) entspricht, und daß zwischen dem Gelenkarm (135) und der Innenwand des Holmes (14) ein Einschubprofil (137) angeordnet ist.

18. Rastgelenk nach Anspruch 17,
dadurch gekennzeichnet,
daß der plattenförmige Gelenkarm (135) mindestens eine Sprossenaufnahme (139) aufweist.

19. Rastgelenk nach Anspruch 17 oder 18,
dadurch gekennzeichnet,
daß das Einschubprofil (137) mindestens eine Sprossenaufnahme (141) sowie holmseitige und gelenkarmseitige Einschubprägungen besitzt.

## Claims

1. Locking hinge for a multipurpose ladder, comprising at least two ladder portions (10, 12), the longitudinal struts (14, 15; 16, 17) of which extend at the intersecting points into pivotally interconnectable hinge portions (22, 23) with hinge members (25, 26), which have recesses (30, 35) distributed about the hinge axis (27), at least one recess (30 - 35) in one hinge member (26) co-operating with at least one respective recess (30' - 35') in the other hinge member (25) in the operational position, in that such recesses are traversed by at least one blocking member (39, 40), which assumes one active and one inactive operational position, of an externally actuatable locking device and are retained in a non-displaceable manner relative to one another, the locking device comprising a control member (41), which is rotatable about the hinge axis (27) and provided with at least

EP 0 359 970 B1

one control curve (43, 44, 45) or pressure area, respectively, and a locking member (42), which has the blocking member (39, 40), is pressed towards the hinge members (25, 26), is actuatable by the control member (41) and is provided with at least one pressure area (50, 51, 52, 53) or control curve, respectively, characterised in that

the pressure area (50, 51, 52, 53) or control curve, respectively, of the locking member (42) cooperates with the control curve (43, 44, 45) or pressure area, respectively, of said control member (41) during rotation of the latter and moves the locking member (42) axially away from the hinge members (25, 26), until the blocking member (39, 40) exposes the recesses (30, 31, 32, 33, 34, 35).

2. Locking hinge according to claim 1,
characterised in that
the control member (41) has the form of a control disc, which has a substantially central opening (55), and wherein the control curves (43, 44, 45) are formed by control cams or inclined lifting means.

3. Locking hinge according to claim 1 or 2,
characterised in that
the locking member (42) is formed from a locking plate provided with a hollow cylinder (57), which extends coaxially with the hinge axis (27) and is moulded to fit thereon, said hollow cylinder traversing the opening (55) of the control member (41).

4. Locking hinge according to claim 3,
characterised in that
the hollow cylinder (57) is orientated towards the hinge members (25, 26) and accommodates a compression spring (59), which presses the locking member (42) towards the control member (41).

5. Locking hinge according to one of claims 1 to 4,
characterised in that
a return spring (61) is disposed between the control member (41) and the locking member (42) and endeavours to rotate the two members (41, 42) relative to one another in such a manner that a pressure-free connection exists between the control curve (43, 44, 45) or pressure area, respectively, of the control member (41) and the pressure area (50, 51, 52, 53) or control curve, respectively, of the locking member (42).

6. Locking hinge according to one of claims 1 to 5,
characterised in that
the return spring (61) is clamped in position between a substantially tangentially orientated projection member (63) of the control member (41) and a substantially tangentially orientated projection member (64) of the locking member (42), which projection members are orientated towards one another.

7. Locking hinge according to one of claims 1 to 6,
characterised in that
the locking member (42), which has a substantially circular configuration when viewed from above, has at least one recess (70, 71, 72, 73), which extends at some distance from the hinge axis (27), one end of said recess extending into a pressure area (50, 51, 52, 53) or control curve, respectively, in which an axially protruding control cam, having the control curve (43, 44, 45) or pressure area, respectively, engages.

8. Locking hinge according to one of claims 1 to 7,
characterised in that
the locking member (42) has at least two recesses (70, 71, 72, 73).

9. Locking hinge according to one of claims 1 to 8,
characterised in that
the locking member (42) has an additional recess (77) for a guide member (78) of the control member (41).

10. Locking hinge according to one of claims 1 to 9, which is provided with a locking member having two blocking members,
characterised in that
the control member (41) has recesses (80, 81) for the blocking members (39, 40) traversing it and at least one radially extending control cable connection (85, 87).

11. Locking hinge according to one of claims 1 to 10,
characterised in that
the control curves (43, 44, 45) of the control member (41) have locking notches (89, 91, 93), which are locatable with the pressure areas (50, 51, 52, 53) of the locking member (42), such areas having locking edges.

12. Locking hinge according to one of claims 1 to 11,
characterised in that
the hinge portions (22, 23), which are held together by a rotatable element (101) together with a securing ring (103), and the locking device are accommodated in a housing comprising two shell-like portions (107, 109).

13. Locking hinge according to claim 12,

characterised in that
the housing portions are connectable by means of a screw (111) or rivets (113).

14. Locking hinge according to claim 12 or 13,
characterised in that
one housing portion (109) has at least one switch-position window (115, 117) and accommodates a switch-position indicator (119), which co-operates with the control member (41)and is disposed in the region of the switch-position window (115, 117).

15. Locking hinge according to one of claims 12 to 14,
characterised in that
the housing portion (109) has a recess (121), in which a bolt or a screw is displaceable, one end of which is connectable to the control member (41), while the other end is connected to a switch knob (123), which is disposed externally of the housing portion (109) and by means of which the control member (41) is adjustable.

16. Locking hinge according to one of claims 1 to 15,
characterised in that
the control member (41) has two radially protruding control cable connections (85, 87), which are actuatable by means of a Bowden cable (133).

17. Locking hinge according to one of claims 1 to 16, the hinge portions of which are connectable to the struts by a plug connection,
characterised in that
each hinge portion (22, 23), has a hinge arm (135), the external configuration of which corresponds substantially to the internal configuration of the strut (14) accommodating said arm, and in that an insert profile (137) is disposed between the hinge arm (135) and the internal wall of the strut (14).

18. Locking hinge according to claim 17,
characterised in that
the plate-like hinge arm (135) has at least one rung receiving member (139).

19. Locking hinge according to claim 17 or 18,
characterised in that
the insert profile (137) has at least one rung receiving member (141) and stamped insert portions at the strut end and hinge arm end.


## Revendications

1. Articulation à verrouillage pour une échelle à plusieurs usages comprenant au moins deux parties d'échelle (10, 12), dont les montants longitudinaux (14, 15; 16, 17) se terminent, aux endroits de jonction, par des parties d'articulation (22, 23) pouvant être reliées à articulation l'une avec l'autre, au moyen d'éléments d'articulation (25, 26), éléments d'articulation (25, 26) présentant des évidements (30, 35) distribués autour de l'axe d'articulation (27), articulation à verrouillage où, lorsqu'elle occupe la position de travail, au moins un évidement (30 - 35) d'un élément d'articulation (26) coopère chacun avec au moins un évidement (30' - 35') de l'autre élément d'articulation (25), par le fait qu'ils sont traversés et maintenus de manière solide l'un sur l'autre par un élément de blocage (39, 40) d'un verrouillage pouvant être actionné à partir de l'extérieur, élément de blocage (39, 40) pouvant occuper une position active et une position non active, le verrouillage étant constitué par un élément de commande (41) rotatif autour de l'axe d'articulation (27) avec au moins une courbe de guidage (43, 44, 45) ou une surface de pression, et par un un élément d'encliquetage (42) avec au moins une surface de pression (50, 51, 52, 53) ou une courbe de guidage, élément d'encliquetage (42) portant l'élément de blocage (39, 40), et appliqué contre les éléments d'articulation (25, 26), et pouvant être actionné par l'élément de commande (41),
caractérisé en ce que
la surface de pression (50, 51, 52, 53) ou la courbe de guidage de l'élément d'encliquetage (42) coopère, lors de la rotation de l'élément de commande (41), avec la courbe de guidage (43, 44, 45) ou la surface de pression de cet élément de commande (41), et éloigne en direction axiale l'élément d'encliquetage (42) des éléments d'articulation (25, 26) jusqu'à ce que l'élément de blocage (39, 40) libère les évidements (30, 31, 32, 33, 34, 35).

2. Articulation à verrouillage suivant la revendication 1,
caractérisée en ce que
l'élément de commande (41) a la forme d'un disque de guidage, présentant un orifice sensiblement central (55) et dont les courbes de guidage (43, 44, 45) sont constituées par des cames de commande ou des portions biseautées.

3. Articulation à verrouillage suivant les revendications 1 ou 2,
caractérisée en ce que
l'élément d'encliquetage (42) est constitué par une plaque d'encliquetage avec un cylindre creux (57) formé sur cette plaque et coaxial à l'axe d'articulation (27), cylindre qui passe au travers de l'orifice (55) de l'élément de commande (41).

4. Articulation à verrouillage suivant la revendication 3,
caractérisée en ce que
le cylindre creux (57) est orienté vers les éléments d'articulation (25, 26) et reçoit un ressort de pression (59) appliquant l'élément d'encliquetage (42) sur l'élément de commande (41).

5. Articulation à verrouillage suivant l'une quelconque des revendications de 1 à 4,
caractérisée en ce que
entre l'élément de commande (41) et l'élément d'encliquetage (42) est disposé un ressort de rappel (51), qui tend à faire tourner l'un par rapport à l'autre les deux éléments (41, 42) de manière telle qu'entre la courbe de guidage (43, 44, 45) ou la surface de pression de l'élément de commande (41) et la surface de pression (50, 51 52, 53) ou la courbe de guidage de l'élément d'encliquetage (42), il est obtenu une liaison non soumise à une pression.

6. Articulation à verrouillage suivant l'une quelconque des revendications de 1 à 5,
caractérisée en ce que
le ressort de rappel (61) est serré entre une protubérance (63), orientée sensiblement tangentiellement, de l'élément de commande (41) et une protubérance (64), orientée sensiblement tangentiellement, de l'élément d'encliquetage (42), protubérances qui se font face l'une l'autre

7. Articulation à verrouillage suivant l'une quelconque des revendications de 1 à 6,
caractérisée en ce que
l'élément d'encliquetage (42) qui, vu en plan, est sensiblement de forme circulaire, présente au moins un évidement (70, 71, 72, 73) disposé à distance de l'axe d'articulation (27), évidement dont une extrémité se termine par une surface de pression (50, 51, 52, 53) ou une courbe de guidage, dans laquelle s'engage une came de commande faisant axialement protubérance et présentant la courbe de guidage (43, 44, 45) ou la surface de pression.

8. Articulation à verrouillage suivant l'une quelconque des revendications de 1 à 7,
caractérisé en ce que
l'élément d'encliquetage (42) présente au moins deux évidements (70, 71, 72, 73).

9. Articulation à verrouillage suivant l'une quelconque des revendications de 1 à8,
caractérisé en ce que
l'élément d'encliquetage (42) présente un évidement supplémentaire (77) destiné à un élément actif (78) de l'élément de commande.

10. Articulation à verrouillage suivant l'une quelconque des revendications de 1 à 9 avec un élément d'encliquetage présentant deux éléments de blocage,
caractérisé en ce que
l'élément de commande (41) présente des évidements (80, 81) pour les éléments de blocage (39, 40) qui le traversent ainsi qu'au moins un raccord à orientation radiale (85, 87) pour un câble de commande.

11. Articulation à verrouillage suivant l'une quelconque des revendications de 1 à 10,
caractérisée en ce que
la courbe de guidage (43, 44, 45) de l'élément de commande (41) présente des entailles d'encliquetage (49, 91, 93), pouvant être encliquetées avec les surfaces de pression (50, 51, 52, 53), présentant des arêtes d'encliquetage, de l'élément d'encliquetage (42).

12. Articulation à verrouillage suivant l'une quelconque des revendications de 1 à 11,
caractérisée en ce que
les parties d'articulation (22, 23) réunies par un élément rotatif (101) avec une bague de sécurité (103), ainsi que le verrouillage, sont logés dans un boîtier composé de deux parties (107, 108) en forme de coquille.

13. Articulation de verrouillage suivant la revendication 12,
caractérisée en ce que
les parties du boîtier sont réunies au moyen d'une vis (111) ou d'un rivet (113).

14. Articulation à verrouillage suivant les revendications 12 ou 13,
caractérisée en ce que
une partie (109) du boîtier comporte au moins un regard d'observation de la position de commande (115, 117) et contient un indicateur de position de commande (119) coopérant avec l'élément de commande (41), indicateur qui est disposé dans la région du regard d'observation de la position de commande (115, 117).

15. Articulation à verrouillage suivant l'une quelconque des revendications de 12 à 14,

caractérisée en ce que

la partie (109) de boîtier présente un évidement (121) dans lequel peut coulisser un boulon ou une vis, dont une extrémité peut être reliée à l'élément de commande (41), tandis que l'autre extrémité est reliée à un bouton de commande (123) disposé à l'extérieur de la partie (109) de boîtier, bouton qui permet de déplacer l'élément de commande (41).

16. Articulation à verrouillage suivant l'une quelconque des revendications de 1 à 15,

caractérisée en ce que

l'élément de commande (41) comporte deux raccords (85, 87), faisant protubérance radialement, pour des câbles de commande, raccords qui peuvent être actionnés au moyen d'un câble Bowden (133).

17. Articulation à verrouillage suivant l'une quelconque des revendications de 1 à 16, dont les parties d'articulation peuvent être reliées aux montants au moyen d'une connexion à fiche,

caractérisée en ce que

chaque partie d'articulation (22, 23) présente un bras d'articulation (135), dont le contour extérieur correspond sensiblement au contour intérieur du montant (14) qui le contient, et en ce qu'entre le bras d'articulation (135) et la paroi intérieure du montant (14) est disposé un profilé d'insertion à coulissement (137).

18. Articulation à verrouillage suivant la revendication 17,

caractérisée en ce que

le bras d'articulation (135) en forme de plaque présente au moins un logement de réception (139) pour un échelon.

19. Articulation à verrouillage suivant les revendications 17 ou 18,

caractérisée en ce que

le profilé d'insertion à coulissement (137) présente au moins un logement de réception (139) pour un échelon ainsi que des portions estampées situées côté montant et côté bras d'articulation pour la réception à coulissement d'un échelon.

FIG.1

FIG.2

FIG.3

FIG.4

FIG.5

FIG.6

FIG.8

FIG.7

FIG.10

FIG.9

FIG.11

FIG.12

FIG.13

109

XV

121

115

117

FIG.14

XV

XVI

115

117

FIG.15

FIG.16

FIG.17

FIG.18

FIG.19

XXII

160

160

155

153

137

150

FIG.20

141

XXI

151

154

156

154

FIG.21

FIG.22

156

XXIV

171        162

170

FIG. 23

XXIV

172

171        180        170

181        162

FIG. 24

180        185

186

181

182

133

FIG. 25

EP 0 359 970 B1